# EUROPÄISCHE PATENTSCHRIFT

(11) **EP 0 700 810 B1**
(45) Veröffentlichungstag und Bekanntmachung des Hinweises auf die Patenterteilung: **12.05.1999**
(21) Anmeldenummer: 95111975.9
(22) Anmeldetag: 28.07.1995
(51) Int. Cl.: B60R 21/20

(54) **Fahrzeuglenkrad mit einem integrierten Gassack-Rückhaltesystem**
Vehicle steering wheel with integral air bag restraint system
Volant de véhicule avec système de retenue à sac gonflable intégré

(30) Priorität: 18.08.1994 DE 4429214
(43) Veröffentlichungstag der Anmeldung: 13.03.1996
(73) Patentinhaber: TRW Occupant Restraint Systems GmbH & Co. KG, 73551 Alfdorf (DE)
(72) Erfinder: Lutz, Joachim, D-73579 Schechingen (DE)
(74) Vertreter: Degwert, Hartmut, Dipl.-Phys.

(56) Entgegenhaltungen:
- US-A- 3 827 715

## Beschreibung

Die Erfindung betrifft ein Fahrzeuglenkrad mit einem integrierten Gassack-Rückhaltesystem, mit einem eine Ummantelung aufweisenden Lenkradkörper, der aus einem Nabenteil zur Befestigung an einer Lenkwelle, einem Lenkradkranz und aus Nabenteil und Lenkradkranz miteinander verbindenden Speichen besteht sowie zur Aufnahme eines aus einem zusammengefalteten Gassack und einem mit einem Montageflansch versehenen Gasgenerator bestehenden Gassack-Moduls ausgebildet ist, und mit einer Abdeckung für den Gassack, wobei der Lenkradkörper aus zwei miteinander verbundenen Teilen zusammengesetzt ist, von denen der erste durch den Nabenteil und einen Befestigungsflansch und der zweite durch den Lenkradkranz mit Ummantelung sowie durch die Speichen und einen zum Befestigungsflansch des ersten Lenkradteils passenden Befestigungsflansch für den Nabenteil gebildet ist.

Ein Fahrzeuglenkrad besteht üblicherweise aus einem metallischen Lenkradkörper, der auch als Lenkradskelett bezeichnet wird, und einer den Lenkradkörper ganz oder teilweise umgebenden Ummantelung, insbesondere aus geschäumtem Kunststoff. An dem zentralen Nabenteil des Lenkradkörpers ist der Lenkradkranz über mehrere, meistens drei, Speichen angeschlossen.

Ein Fahrzeuglenkrad der eingangs erwähnten Art ist aus der US-A-3 827 715 bekannt. Hier sind die Speichen mittels Bolzen an dem Nabenteil befestigt. Der Nabenteil ist mit einem axialen Durchgangsloch für das Ende der Lenkwelle versehen. Die Befestigung an der Lenkwelle erfolgt mittels einer auf deren Ende aufgeschraubten Schraubmutter. Nach der Befestigung des Fahrzeuglenkrades an der Lenkwelle wird ein kompletter Gassack-Modul mit zusammengefaltetem Gassack und Gasgenerator in den hohlen Nabenteil eingesetzt. Schließlich wird noch eine Abdeckung über den Gassack-Modul aufgesetzt.

Ein einstückig geformtes Lenkrad ist aus der GB-A-1 495 347 bekannt. Im Innern des Lenkrads ist ein aus Gasgenerator und zusammengefaltetem Gassack bestehender Gassack-Modul angeordnet.

Ein Lenkrad mit einem zweiteiligen Lenkradkörper, bei dem die Abdeckung für den Gassack in die Ummantelung integriert ist, ist aus der EP-A-0 648 661 bekannt. Diese Druckschrift fällt unter Artikel 54 (3) EPÜ und ist daher nur für die Beurteilung der Neuheit der Erfindung zum Stand der Technik zu rechnen. Zum äußeren Teil des Lenkradkörpers gehören ein Lenkradkranz und kurze Speichen. Zum inneren Teil gehören eine Nabe zur Befestigung an einer Lenksäule und Speichen, über die die Nabe mit den Speichen des äußeren Teils verbunden ist. Die Speichen des inneren Teils weisen außerdem eine Schulter auf, auf der die Unterseite eines einen Gasgenerator enthaltenden Gehäuses zur Anlage kommt und festgeschraubt ist. Für die Montage des Lenkrades an der Lenksäule ist in der Ummantelung eine Öffnung vorgesehen, die einen seitlichen Zugang zur Oberseite der Nabe ermöglicht.

Durch die Erfindung wird ein Fahrzeuglenkrad der eingangs angegebenen Art zur Verfügung gestellt, dessen Herstellung und Montage wesentlich vereinfacht sind. Bei dem erfindungsgemäßen Fahrzeuglenkrad ist die Abdeckung in die Ummantelung integriert. Durch diese Ausbildung des Fahrzeuglenkrades entfällt die gesonderte Herstellung und Montage einer Abdeckung. Außerdem ist der Montageflansch des Gassack-Moduls zwischen den Befestigungsflanschen der Lenkradteile eingespannt. Das Fahrzeuglenkrad mit integriertem Gassack-Rückhaltesystem kann als fertige Baugruppe angeliefert werden. Die Befestigung am Ende der Lenkwelle erfolgt bei der bevorzugten Ausführungsform mittels einer innenseitig keilverzahnten Buchse am Nabenteil, die formschlüssig auf das außenseitig entsprechend keilverzahnte Ende der Lenkwelle aufschiebbar ist, wobei der Nabenteil axial an der Lenkwelle durch ein Sicherungsteil festgelegt wird, das in eine umlaufende Nut am freien, in den Nabenteil hineinragenden Ende der Lenkwelle eingreift.

Weiterhin werden bei der bevorzugten Ausführungsform die Befestigungsflansche der beiden Lenkradteile durch Schraubbolzen und Schraubmuttern zusammengehalten.

Weitere Merkmale und Vorteile der Erfindung ergeben sich aus der folgenden Beschreibung einer bevorzugten Ausführungsform und aus der Zeichnung, auf die Bezug genommen wird. In der Zeichnung zeigen:
- Figur 1: eine schematische Schnittansicht des Lenkrades mit integriertem Gassack-Modul;
- Figur 2: eine Explosionsansicht dieses Lenkrades; und
- Figur 3: eine Detailansicht des Lenkrades.

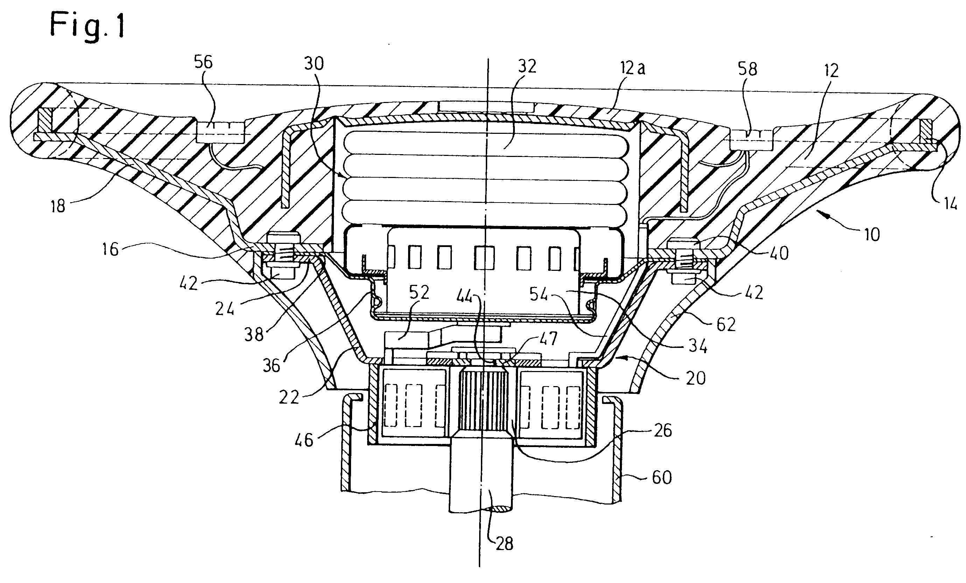

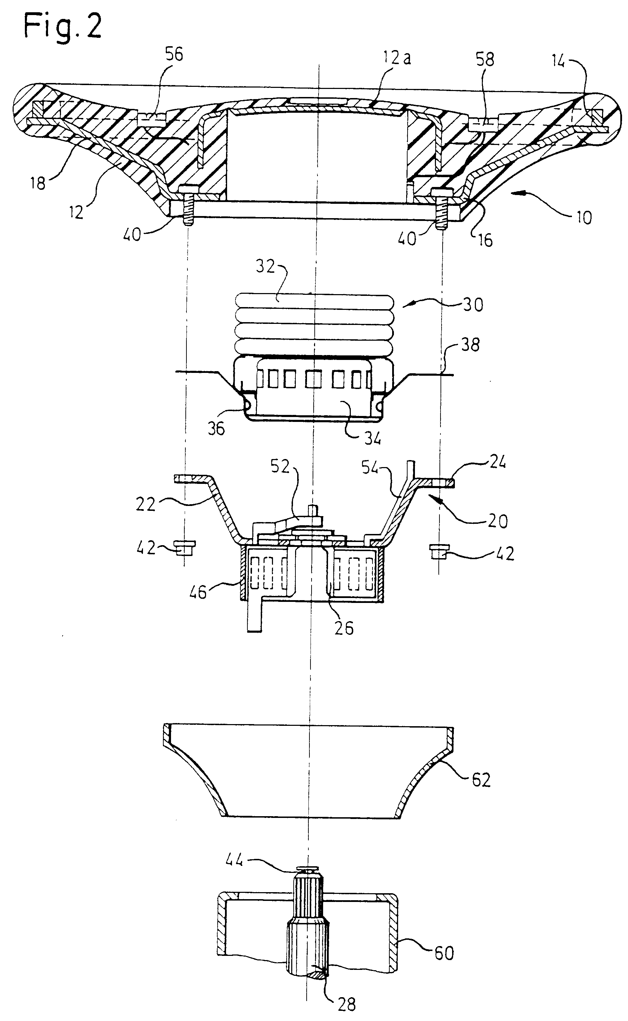

Das in den Figuren 1 und 2 gezeigte Lenkrad ist aus zwei Lenkradteilen zusammengesetzt, einem oberen Lenkradteil 10, der mit einer Ummantelung 12 versehen einen Lenkradkranz 14, einen radialen Befestigungsflansch 16 sowie Speichen 18 umfaßt, und einem unteren Lenkradteil 20, der aus einem Nabenteil 22 mit einem gleichfalls radialen Befestigungsflansch 24 und einer zylindrischen Buchse 26 zur Befestigung am Ende einer Lenkwelle 28 besteht. In die Ummantelung 12 ist eine Abdeckung 12a für einen Gassack-Modul 30 integriert, der im Inneren des Lenkrades zwischen dieser Abdeckung 12a und dem Boden des Nabenteils 22 aufgenommen ist. Der Gassackmodul 30 besteht aus einem zusammengefalteten Gassack 32 und einem Gasgenerator 34, der in einem allgemein topfförmigen Halterungsteil 36 sitzt, welches seinerseits mit einem radial auswärts gerichteten Montageflansch 38 versehen ist. Dieser Montageflansch 38 wird zwischen den Befestigungsflanschen 16 und 24 der beiden Lenkradteile 10, 20 eingespannt.

Die Befestigung der beiden Lenkradteile 10, 20 aneinander erfolgt mittels Stehbolzen, die den Befestigungsflansch 16 durchsetzen und durch korrespondierende Öffnungen im Montageflansch 38 sowie in dem Befestigungsflansch 24 hindurchgeführt sind, sowie auf die Enden der Stehbolzen 40 aufgesetzte Schraubmuttern 42.

Das im Durchmesser verjüngte Ende der Lenkwelle 28 ist mit einer außenseitigen Keilverzahnung versehen, die formschlüssig in eine innenseitige Kernverzahnung der Buchse 26 paßt. Die Buchse weist an ihrem dem Nabenteil 22 benachbarten Ende einen Durchgang für das verjüngte, eine Umfangsnut 44 aufweisende freie Ende der Lenkwelle 28 auf, welches in den Innenraum des Nabenteils 22 hineinragt. In diese umlaufende Nut 44 wird ein Sicherungsteil 47 quer zur Achse der Lenkwelle 28 eingesetzt, um den Nabenteil 22 axial am Ende der Lenkwelle 28 zu sichern.

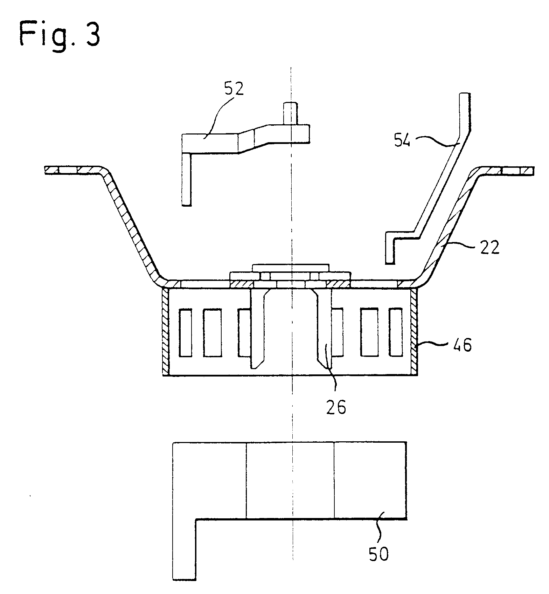

Die Buche 26 ist im radialen Abstand von einer zylindrischen Schürze 46 umgeben, die fest mit dem Nabenteil 22 verbunden ist und mit der Buchse 26 einen Ringraum zur Aufnahme von wenigstens einer spiralförmig gewundenen Kontaktfeder bildet. Diese in Figur 3 schematisch gezeigte Kontaktfeder 50 wird an ihrem inneren Ende mit Anschlußteilen 52, 54 verbunden, die mit Steckanschlüssen versehen sind und von denen das Anschlußteil 52 die Verbindung zum Gasgenerator 34 herstellt, während das Anschlußteil 54 zur Verbindung mit elektrischen Schaltern 56, 58 dient, die in die Ummantelung 12 des Lenkrades integriert sind. Das äußere Ende der Kontaktfeder 50 liegt in bezug auf die die Lenkwelle 28 umgebende Lenksäule 60 fest und stellt die Verbindung zu Schaltkreisen im Inneren des Fahrzeugs her. Über die Schürze 46 und den Nabenteil 22 wird schließlich noch ein allgemein glockenförmiges Abdeckteil 62 gestülpt, welches die Außenkontur der Ummantelung 12 des Lenkrades zur Lenksäule 60 hin fortsetzt.

Das erfindungsgemäße Fahrzeuglenkrad mit integriertem Gassack-Rückhaltesystem weist zahlreiche Vorteile gegenüber herkömmlichen Ausführungen auf. Da die Abdeckung 12a in die Ummantelung 12 integriert ist, gibt es keine unerwünschten Trennkonturen oder Farbabweichungen. Der modulare Aufbau des Lenkrades aus zwei zusammengesetzten Lenkradteilen und einem vorgefertigten Gassack-Modul erweist sich als besonders zweckmäßig, weil die Herstellung jedes Bestandteils individuell optimiert werden kann. Durch die Ausbildung der Anschlußteile 52, 54 mit Steckverbindungselementen können beim Zusammenbau des Lenkrades die Kontaktverbindungen durch Zusammenfügen in Axialrichtung hergestellt werden. Der größte Vorteil ergibt sich für den Automobilhersteller, der ein fertiges Lenkrad mit bereits eingebautem Gassack-Rückhaltesystem angeliefert bekommt und dieses mit geringem Aufwand im Fahrzeug montieren kann. Der kompakte Aufbau des Lenkrades führt ferner zu Einsparungen an axialer Bauhöhe. Da schließlich die Bestandteile des Lenkrades leicht voneinander getrennt werden können, wird auch das Recycling erleichtert.

## Patentansprüche

1. Fahrzeuglenkrad mit einem integrierten Gassack-Rückhaltesystem, mit einem eine Ummantelung (12) aufweisenden Lenkradkörper, der aus einem Nabenteil (22) zur Befestigung an einer Lenkwelle (28), einem Lenkradkranz (14) und aus Nabenteil und Lenkradkranz miteinander verbindenden Speichen (18) besteht sowie zur Aufnahme eines aus einem zusammengefalteten Gassack (32) und einem mit einem Montageflansch (38) versehenen Gasgenerator (34) bestehenden Gassack-Moduls (30) ausgebildet ist, und mit einer Abdeckung (12a) für den Gassack, wobei der Lenkradkörper aus zwei miteinander verbundenen Teilen (20, 10) zusammengesetzt ist, von denen der erste (20) durch den Nabenteil (22) und einen Befestigungsflansch (24) und der zweite (10) durch den Lenkradkranz (14) mit Ummantelung (12) sowie durch die Speichen (18) und einen zum Befestigungsflansch (24) des ersten Lenkradteils (20) passenden Befestigungsflansch (16) für den Nabenteil (22) gebildet ist, dadurch gekennzeichnet, daß die Abdeckung (12a) in die Ummantelung (12) integriert ist und daß der Montageflansch (38) des Gassack-Moduls (30) zwischen den Befestigungsflanschen (16, 24) der Lenkradteile (20, 10) eingespannt ist.

2. Fahrzeuglenkrad nach Anspruch 1, dadurch gekennzeichnet, daß beide Lenkradteile (20, 10) mittels durch die Befestigungsflansche (16, 24) geführter Schraubbolzen (40) und Schraubmuttern (42) miteinander verbunden sind.

3. Fahrzeuglenkrad nach Anspruch 1 oder 2, dadurch gekennzeichnet, daß der Nabenteil (22) eine innenseitig keilverzahnte Buchse (26) aufweist, die formschlüssig auf das außenseitig keilverzahnte Ende der Lenkwelle (28) aufschiebbar ist, und daß der Nabenteil (22) axial an der Lenkwelle (28) durch ein Sicherungsteil (47) festlegbar ist, das in eine umlaufende Nut (44) am freien, in den Nabenteil (22) hineinragenden Ende der Lenkwelle (28) eingreift.

4. Fahrzeuglenkrad nach Anspruch 3, dadurch gekennzeichnet, daß die Buchse (26) im radialen Abstand von einer Schürze (46) umgeben ist, die mit der Buchse einen Ringraum zur Aufnahme wenigstens einer in mehreren Gängen um die Buchse gewundenen Kontaktfeder (50) bildet.

## Claims

1. A vehicle steering wheel with an integrated gas bag restraining system comprising a steering wheel body provided with a sheathing (12) and consisting of a hub part (22) for securing to a steering shaft (28), a steering wheel rim (14) and spokes (18) connecting said hub part and said steering wheel rim, and designed for accommodating a gas bag module (30) comprising a folded gas bag (32) and a gas generator (34) provided with a mounting flange (38), and comprising a cover (12a) for the gas bag, said steering wheel body being made up of two interconnected parts (20, 10), the first (20) of which is formed by said hub part (22) and a fastening flange (24) and the second (10) of which is formed by said steering wheel rim (14) and said sheathing (12) as well as by said spokes (18) and a fastening flange (16) for said hub part (22) matching said fastening flange (24) of said first steering wheel part (20), characterized in that said cover (12a) is integrated in said sheathing (12) and that said mounting flange (38) of said gas bag module (30) is clamped between said fastening flanges (16, 24) of said steering wheel parts (20, 10).

2. The vehicle steering wheel as set forth in claim 1, characterized in that both steering wheel parts (20, 10) are connected to each other by means of bolts (40) passing through said fastening flanges (16, 24) and by means of nuts (42).

3. The vehicle steering wheel as set forth in claim 1 or 2, characterized in that said hub part (22) has an internally splined bush (26) which is adapted to be slid with an interlocking fit onto the externally splined end of said steering shaft (28), and that said hub part (22) is adapted to be secured in place axially on said steering shaft (28) by a locking part (47) which engages a peripheral groove (44) on the free end of said steering shaft (28) protruding into said hub part (22).

4. The vehicle steering wheel as set forth in claim 3, characterized in that said bush (26) is surrounded by a radially spaced apron (46) which forms an annular space together with said bush for receiving at least one contact spring (50) wound around said bush in several turns.

## Revendications

1. Volant de direction de véhicule avec un système de retenue à sac à gaz intégré, avec un corps de volant de direction qui présente une enveloppe (12), corps qui consiste en un moyeu (22) servant à la fixation sur un arbre de direction (28), en une couronne de direction (14) et en des rayons (18) qui relient l'un à l'autre le moyeu et la couronne de direction, et qui est constitué de façon à recevoir un module de sac à gaz (30) consistant en un sac à gaz replié (32) et en un générateur de gaz (34) muni d'une bride de montage (38), et avec un couvercle (12a) pour le sac à gaz, le corps du volant de direction se composant de deux parties reliées ensemble (20,10), dont la première (20) est formée par le moyeu (22) et une bride de fixation (24) et la seconde (10) est formée par la couronne de direction (14) avec l'enveloppe (12) ainsi que par les rayons (18) et une bride de fixation (16), qui s'ajuste à la bride de fixation (24) de la première partie (20) du volant de direction, pour le moyeu (22), volant de direction de véhicule caractérisé en ce que le couvercle (12a) est intégré dans l'enveloppe (12) et en ce que la bride de montage (38) du module de sac à gaz (30) est serrée entre les brides de fixation (16,24) des parties (20,10) du votant de direction.

2. Volant de direction de véhicule selon la revendication 1, caractérisé en ce que les deux parties (20,10) du volant de direction sont reliées ensemble au moyen de boulons filetés (40) passant à travers les brides de fixation (16,24) et d'écrous (42).

3. Volant de direction de véhicule selon la revendication 1 ou 2, caractérisé en ce que le moyeu (22) présente un manchon (26), cannelé intérieurement, qui peut être enfilé par coopération de formes sur l'extrémité cannelée extérieurement de l'arbre de direction (28), et en ce que le moyeu (22) peut être fixé axialement sur l'arbre de direction (28) par une pièce de blocage (47), qui vient en prise dans une rainure (44), faisant tout le tour, à l'extrémité libre de l'arbre de direction (28) qui pénètre dans le moyeu (22).

4. Volant de direction de véhicule selon la revendication 3, caractérisé en ce que le manchon (26) est entouré à une certaine distance radiale par un tablier (46), qui forme avec le manchon un espace annulaire servant à recevoir au moins un ressort de contact (50), enroulé en plusieurs spires autour du manchon.
